# FASCICULE DE BREVET EUROPEEN

(11) **EP 1 212 932 B1**
(45) Date de publication et mention de la délivrance du brevet: **13.02.2008**
(21) Numéro de dépôt: 01460076.1
(22) Date de dépôt: 04.12.2001
(51) Int. Cl.: A01C 7/20, A01C 5/06, A01B 49/06

(54) **Semoir**
Sämaschine
Seeder

(30) Priorité: 05.12.2000 FR 0015731
(43) Date de publication de la demande: 12.06.2002
(73) Titulaire: SULKY-BUREL S.A., F-35220 Chateaubourg (FR)
(72) Inventeur: Clochard, Daniel, 35113 Domagne (FR); Le Naour, Jean-Yves, 35220 Saint-Melaine (FR)
(74) Mandataire: Le Faou, Daniel

(56) Documents cités:
- EP-A- 0 611 204
- WO-A-85/05246
- WO-A-99/39563
- US-A- 4 027 606
- US-A- 4 502 547
- US-A- 5 452 768
- US-A- 5 934 208

## Description

La présente invention concerne un semoir, et plus particulièrement un semoir dit de "travail du sol simplifié" permettant de semer sans aucun travail préalable du sol, ou sur un sol ayant été soumis uniquement à un travail simplifié.

Un semoir de ce genre est décrit par exemple dans les documents GB-1 218 785, GB-2 040 656 et EP-0 611 204

Un semoir de ce genre est commercialisé par la société française SULKY-BUREL sous la dénomination commerciale "UNIDRILL" et la marque déposée "SULKY".

Il comprend un châssis qui supporte une trémie à semences, destinée à être attelée à un tracteur, une rangée transversale de bras porteurs disposés longitudinalement sous le châssis portant chacun deux outils semeurs (décalés en direction longitudinale), qui sont alimentés en semence à partir de la trémie (via des tubulures appropriées de type connu) et une rangée transversale de rouleaux suiveurs, associés chacun à l'un, ou à la paire, d'outil(s) semeur(s) du même bras porteur, et qui sont montés individuellement fous en rotation sur les bras porteurs, chacun des bras porteurs étant articulé à l'avant, indépendamment l'un de l'autre, par sa partie avant autour de tronçons d'arbres alignés horizontaux et transversaux à l'extrémité arrière d'une biellette qui est elle-même articulée à son extrémité avant sur une partie du châssis.

Une série de ressorts avant et arrière, disposés respectivement en avant et en arrière des outils semeurs, sollicitent en permanence chacun des bras porteurs au pivotement du haut vers le bas.

Un tel agencement est notamment connu du document EP-0 611 204 précité, considéré comme représentatif de l'état de la technique le plus proche de l'objet de l'invention.

Les ressorts arrière sont de préférence situés en arrière des rouleaux suiveurs.

Plus précisément, le châssis est en deux parties, articulées l'une sur l'autre, à savoir une partie antérieure - par laquelle le semoir est attelé au véhicule tracteur - et une partie principale arrière, qui supporte la trémie et porte les outils semeurs et les divers équipements associés.

Au moyen d'un vérin hydraulique, il est possible de faire pivoter légèrement ces deux parties l'une par rapport à l'autre.

Les outils semeurs comprennent, de manière usuelle, une paire de disques ouvreurs qui sont associés chacun à un coutre semeur relié à la trémie par une tubulure d'alimentation en semences (voir par exemple la figure 1 du document EP-0 611 204 déjà cité).

Ils peuvent également consister, dans un type de semeur différent auquel s'applique également la présente invention, en une paire de dents semeuses ; dans ce cas, les dents peuvent être montées élastiquement sur le bras, par exemple au moyen de lames à ressort.

Les rouleaux suiveurs, disposés en arrière de ces disques, comprennent généralement une paire de roues accolées, disposées chacune dans l'alignement d'un disque, ou une seule roue munie de deux bourrelets latéraux ayant la même fonction qu'une paire de roues plus fines.

Selon le document EP-0 611 204, il est prévu une paire de roues qui sont légèrement désaxées, formant une manivelle, les deux axes étant montés fixes ou tournants l'un par rapport à l'autre.

Ce type de roues peut être utilisé naturellement avec un semoir conforme à la présente invention.

Avec ce type de semoir, chaque bras porteur est indépendant, et monté sur ressort.

Chacun des disques ouvreurs découpe le sol et y trace un sillon ; le coutre dont il est équipé, qui fait également office de rasette, ouvre le sillon et dépose les graines au fond du sillon, dans la terre fine.

Le rouleau suiveur - usuellement appelé rouleau-plombeur - referme le sillon et assure un contact intime entre les graines et la terre.

Le semoir repose au sol à la fois par les disques semeurs et par les rouleaux suiveurs.

En jouant sur l'inclinaison relative des deux parties de châssis, par actionnement du vérin hydraulique dans un sens ou dans l'autre, l'agriculteur ou autre utilisateur peut soit alléger les disques ouvreurs, lorsqu'il travaille en terrain meuble soit au contraire plus reporter le poids du semoir sur les disques, afin d'en améliorer la pénétration dans le sol, en terrain plus dur.

Si, de manière générale, un tel semoir donne globalement satisfaction, il présente néanmoins certains inconvénients.

En effet, il y a une mauvaise maîtrise de la profondeur de travail, lors d'un semis sur un sol hétérogène.

Par exemple, si les disques ont été réglés pour une profondeur sur un sol dur, ils vont plonger dès qu'ils rencontrent un sol plus tendre.

Si on utilise le vérin hydraulique pour soulager les disques, il en résulte qu'ils n'ont plus suffisamment de résistance pour être correctement entraînés en rotation ; ne tournant pas régulièrement, ils provoquent alors des bourrages, car les pailles et débris se trouvant sur le sol sont retenus par les disques.

De plus, lorsqu'on soulage l'effort sur les disques, les débris ne sont pas coupés mais pincés dans le sol, ce qui place la graine au contact de la paille et non plus du sol ; ce phénomène n'est pas favorable à une bonne germination.

Il a déjà été proposé de placer, à l'avant des disques semeurs, une rangée de roues additionnelles, de manière à mieux répartir l'appui du semoir sur le sol.

En prévoyant la possibilité d'un réglage en hauteur des disques semeurs par rapport à l'ensemble des roues, il est possible de régler une profondeur de travail déterminée, notamment en fonction du type de graines, ceci indépendamment de la dureté du sol.

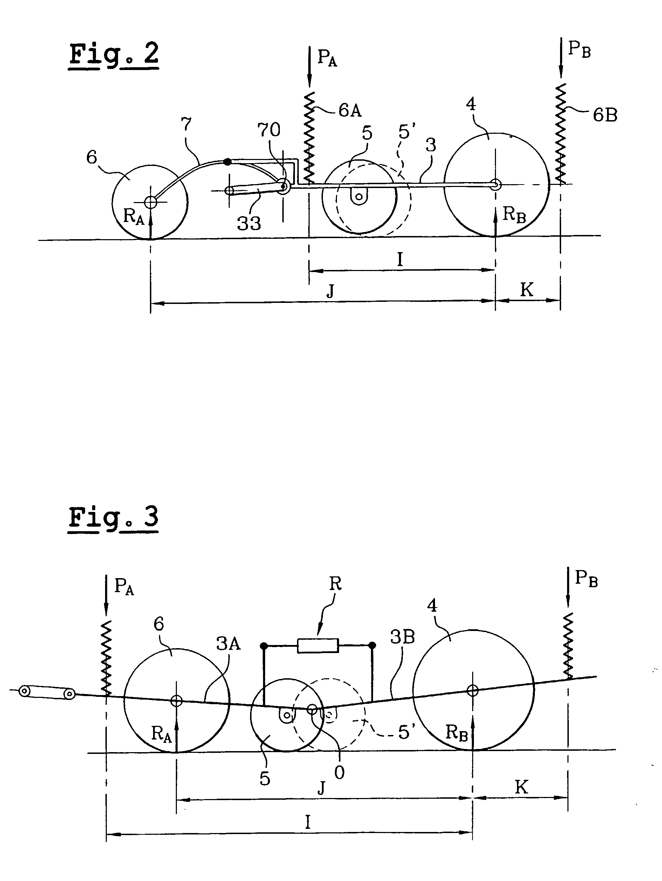

Un tel système, qui sera succinctement décrit plus loin en référence à la figure 3, présente cependant l'inconvénient d'un encombrement en longueur relativement important.

De plus, de part sa conception, ainsi que cela sera démontré plus loin, la force d'appui au sol des roues avant est très forte, ce qui pose des problèmes lorsqu'on travaille en sol meuble.

La présente invention a pour objectif de résoudre ces différents problèmes, et de proposer un semoir qui permet une meilleure maîtrise de la profondeur de travail et donc, en conséquence, un meilleur placement de la graine au contact du sol tout en évitant un encombrement important en longueur.

A cet effet, conformément à l'invention, le semoir - qui est du type précédemment décrit - est remarquable par le fait que chacun des bras porteurs est équipé d'au moins un organe d'appui au sol qui est situé en avant de la ligne desdits tronçons d'arbres, cet organe d'appui étant réglable en hauteur par rapport au bras porteur qu'il équipe, la liaison de l'organe d'appui au sol avec le bras porteur étant réalisée en contournant l'axe d'articulation de la biellette sur la partie de châssis, par passage au-dessus ou en dessous de cet axe.

La présence de ces organes d'appui (telles que des roues), qui se trouvent sous la partie avant du châssis, n'entraîne pas de modification de l'encombrement en longueur du semoir.

De plus, comme cela sera démontré en référence aux figures 2 et 3, la pression d'appui au sol des organes d'appui avant est limitée.

Dans un mode de réalisation particulièrement avantageux, chacun des organes d'appui au sol est porté par un bras auxiliaire articulé sur le bras précité (bras principal).

Cet axe d'articulation du bras auxiliaire au bras principal coïncide de préférence avec ladite ligne d'arbres.

Le bras auxiliaire est éventuellement coudé, de sorte qu'il contourne l'axe d'articulation de la biellette sur la partie de châssis, en passant au-dessus ou en dessous de cet axe.

Bien entendu, le semoir comporte des organes de réglage permettant d'ajuster le positionnement angulaire de chacun des bras auxiliaires par rapport au bras principal.

Ces moyens peuvent être des moyens mécaniques, par exemple du genre vis-écrou.

Selon un mode de réalisation possible, lesdits organes de réglage comprennent un système de rappel élastique, tel qu'un ressort, qui confère au bras auxiliaire une certaine liberté de débattement angulaire, du bas vers le haut, à l'encontre de la résistance de ce système élastique, par rapport au bras porteur auquel il est articulé.

Les organes d'appui au sol sont avantageusement des roues.

Cependant, d'autres types d'organes d'appui peuvent être prévus, qui sont susceptibles d'effectuer un travail préliminaire du sol.

Il s'agit par exemple de disques gaufrés et/ou crénelés, ou des lames niveleuses.

Avantageusement, si on a affaire à des organes semeurs consistant en une paire de disques ouvreurs, il est prévu une paire d'organes d'appui au sol situé chacun dans l'alignement d'un disque ouvreur.

Ainsi, la préparation préalable du sol se fait en regard du semis.

Dans un mode de réalisation préféré, les rouleaux additionnels avant - ou les autres organes d'appui - sont amovibles.

Ainsi, l'utilisateur peut optionnellement les utiliser ou non en fonction du travail qu'il a à exécuter et aussi en fonction de la nature du sol qu'il doit travailler.

Ces organes d'appui peuvent également être interchangeables, des organes de préparation du sol pouvant être utilisés pour certains travaux, en substitution des roues.

Dans un mode de réalisation particulièrement avantageux, le châssis du semoir est composé d'une partie principale qui supporte la trémie et qui porte l'ensemble des bras porteurs (et leur équipement) et d'une partie antérieure destinée à être attelée à un véhicule tracteur, la partie antérieure est articulée à la partie principale autour d'un axe horizontal et transversal, et un moyen de commande, tel qu'un vérin hydraulique par exemple, est prévu pour permettre d'ajuster l'angle d'articulation relative de ces deux parties de châssis.

Cet agencement, qui est connu en soi, du reste, permet d'effectuer un report de charge sur les organes d'appui avant, ce qui peut être bénéfique dans certaines situations, ainsi que cela sera expliqué plus loin.

D'autres caractéristiques et avantages de l'invention apparaîtront de la description et des dessins annexés qui en représentent à simple titre d'exemple non limitatif, un mode de réalisation possible.

Sur ces dessins :
- la figure 1 est une vue de côté schématique d'un semoir conforme à l'invention ;
- les figures 2 et 3 sont des schémas qui permettent de comprendre la différence de répartition des charges dans le cas d'un semoir conforme à l'invention (figure 2) et dans le cas d'un semoir connu (figure 3) ;
- la figure 4 est une vue de face schématique, qui illustre une possibilité de montage amovible d'une roue à bourrelets à l'extrémité avant du bras auxiliaire ;
- la figure 4A est une vue de côté de la figure 4 ;
- la figure 5 est une vue de côté d'un organe d'appui constitué par une paire de disques gaufrés ;
- la figure 6 est une figure similaire aux figures 4A et 5, montrant une paire de roues jumelées ;
- la figure 7 est une vue de face qui représente un organe d'appui consistant en une paire de lames niveleuses ;
- la figure 7A est une vue de côté de la figure 7 ;
- la figure 8 est une vue de côté d'un organe d'appui constitué par une paire de disques de préparation du sol qui sont portés par une lame élastique.
- la figure 9 est une vue partielle correspondant à la partie gauche de la figure 1, destinée à illustrer le principe de mise en oeuvre d'un report de charge ;
- la figure 10 montre une variante du système de réglage en hauteur de l'organe d'appui avant.

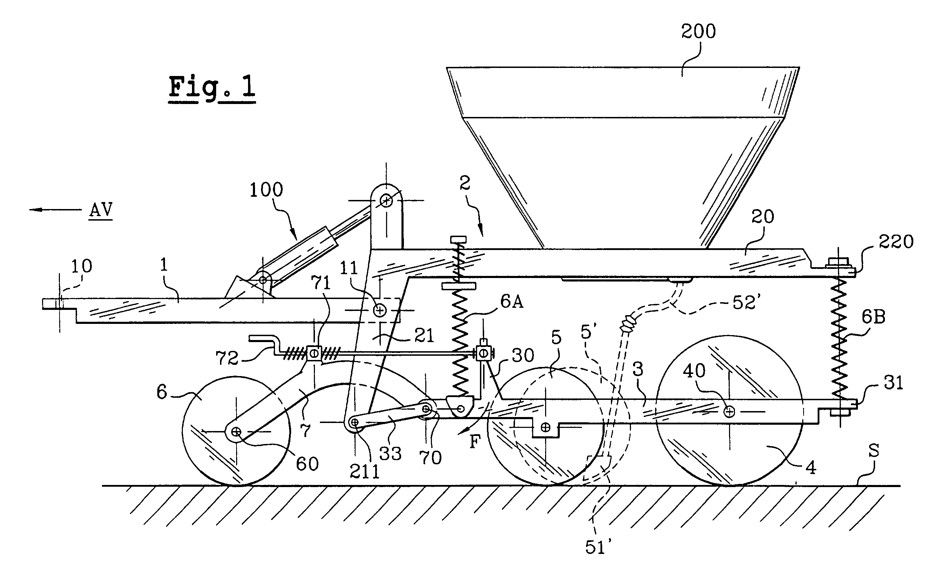

Sur la figure 1, la flèche **AV** représente l'avant du semoir où se trouve le véhicule tracteur auquel il est attelé.

Le sol est référencé **S**.

Ce semoir possède un châssis en deux parties 1,2.

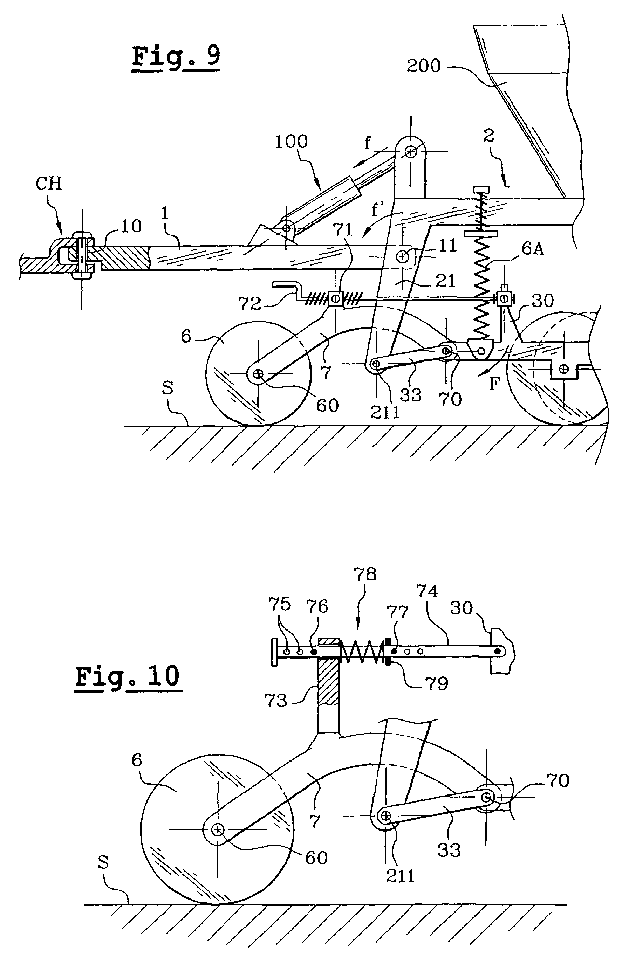

La partie de châssis 1, située à l'avant, possède une extrémité avant 10 adaptée pour son attelage au véhicule tracteur (non représenté). L'attelage se fait traditionnellement au moyen d'une chape portée par le véhicule tracteur. Une telle chape est représentée et référencée **CH** sur la figure 9.

L'extrémité arrière de la partie de châssis antérieure 1 est articulée autour d'un axe 11 horizontal et transversal sur l'autre partie, ou partie principale, 2 du châssis.

Cette partie 2 porte la trémie 200 qui contient les graines à semer.

Un vérin hydraulique 100 permet de régler l'inclinaison relative des deux parties 1, 2.

La partie 2 comprend une plate-forme horizontale 20, qui supporte la trémie 200 ; à l'avant de cette plate-forme se trouve une partie 21 dirigée vers le bas.

De manière connue, il est prévu un ensemble de bras - qui seront appelés plus loin bras principaux ou bras porteurs - 3, disposés longitudinalement et côte à côte, parallèlement les uns aux autres.

Ces bras peuvent être monoblocs ou, au contraire, être composés de plusieurs éléments fixés rigidement les uns aux autres, par exemple par soudage et/ou boulonnage.

Chacun des bras 3 est articulé par un tronçon d'axe horizontal transversal 70 sur une biellette 33, également sensiblement horizontale, laquelle est elle-même articulée à sa partie avant autour d'un axe transversal unique 211.

Chaque bras principal 3 porte une paire d'organes semeurs 5, 5' situés devant une roue (ou une paire de roues) plombeuse(s) 4 ; celle-ci -ou celles-ci- est (sont) montée(s) folle(s) autour d'un axe horizontal et transversal 40. Dans le cas ou on a affaire à une paire de roues 4, elles sont situées bien sûr de chaque côté du bras 3 qui les porte.

Dans l'exemple illustré, les organes semeurs sont des disques ouvreurs 5, 5' qui, de manière bien connue, sont décalés en direction longitudinale ; ils sont disposés de chaque côté du bras porteur 3. Chacun des disques est équipé d'un coutre (ou rasette), alimenté en semence à partir de la trémie, via une tubulure d'approvisionnement appropriée qui n'est pas non plus représentée afin de pas alourdir inutilement la figure.

Une disposition de ce genre est représentée par exemple à la figure 1 du brevet européen 0 611 204.

Sur la figure 1 on a représenté schématiquement en traits mixtes fins le coutre 51' et la tubulure d'alimentation 52' associés à l'un des disques de la paire, à savoir le disque 5'.

Des ressorts 6A, 6B, tels que des ressorts de compression hélicoïdaux par exemple, disposés verticalement, respectivement en avant des organes semeurs 5, 5' et en arrière des roues 4 sollicitent constamment chacun un bras 3 vers le bas, c'est-à-dire vers le sol, en tendant à le faire pivoter autour de son axe 70, comme symbolisé par la flèche **F** sur la figure 1.

Les ressorts arrière 6B prennent appui en partie haute contre un appendice 220 prévu à l'extrémité arrière de la plate-forme 20 et en partie basse contre un appendice 31 prévu à l'extrémité arrière du bras 3. La dureté de ces ressorts est réglable, comme cela est bien connu.

Des moyens de retenue appropriés (butées) non représentés sont bien entendu prévus pour limiter la course de descente de l'extrémité arrière de chaque bras porteur 3.

Conformément à l'invention, il est prévu en avant de l'axe 211, sous la partie avant du châssis, un ensemble de roues 6 qui contribuent à l'appui au sol du semoir.

Ces roues sont associées chacune à un bras 3.

Il s'agit par exemple de roues en caoutchouc, gonflables ou non, ou en acier, le matériau qui les constitue étant choisi en fonction de la nature du sol à semer.

Elles sont montées folles, au moyen d'un axe 60, à l'extrémité d'un bras auxiliaire 7 coudé, c'est-à-dire de forme courbe, lui permettant de contourner l'axe 211 précité. Dans l'exemple illustré, il passe au-dessus de cet axe. Il pourrait tout aussi bien passer en dessous de l'axe 211.

A son extrémité arrière, chaque bras 7 est articulé sur les tronçons d'axe 70.

Pour raison de simplicité de conception et de prix de revient, cette solution est intéressante. Toutefois, on pourrait prévoir, bien évidemment, d'articuler le bras 7 sur son bras porteur 3 autour d'un axe distinct du tronçon d'axe 70.

Ce qui est important, c'est que, d'une part chaque ligne de semis est composée, d'avant en arrière, d'un organe d'appui au sol 6, d'organes semeurs 5-5' et d'une (ou d'une paire de) roues(s) 4, tous ces éléments étant portés par un même bras 3 qui est indépendant des autres, et qui est articulé en partie avant via la biellette 33 à la partie principale 2 du châssis, des ressorts 6A-6B tendant à le repousser vers le bas, et, d'autre part, l'organe d'appui au sol est situé en avant de l'axe d'articulation 70 du bras 3 sur la biellette 33.

En avant des disques 5, 5', le bras 3 est muni d'un appendice 30 dirigé vers le haut, qui est adapté pour permettre de guider en rotation, tout en immobilisant en translation, la tige d'une manivelle 72 qui s'étend longitudinalement juste au-dessus du bras coudé 7.

Ce dernier comporte un écrou 71 qui est traversé par la partie avant, filetée, de la tige de manivelle.

Ainsi, on comprend qu'en faisant tourner la manivelle, on peut faire pivoter, dans un sens ou dans l'autre, le bras 7 autour de l'axe 70 et, en conséquence, régler la profondeur de travail des disques ouvreurs 5, 5'.

Ainsi, lorsqu'on relève les roues 6, les disques 5, 5' vont pénétrer plus profondément dans le sol, et inversement.

Cependant, une fois effectué l'ajustage en hauteur souhaité, le bras 7 est rigidement solidaire du bras porteur 3, ces deux éléments constituant alors un ensemble indéformable.

La figure 2 reprend de manière schématique l'organisation générale qui vient d'être décrite.

La force développée par les ressorts 6A et 6B sont respectivement symbolisés par les flèches **P_{A}** et **P_{B}** ; les forces d'appui au sol des roues 6 et 4 sont respectivement désignées **R_{A}** et **R_{B}.**

La distance d'appui au sol de ces deux roues est désignée **J.** Les distances des lignes d'action des ressorts 6A et 6B par rapport au point d'appui au sol de la roue 4 sont désignés respectivement **I** et **K**.

Sur la figure 3, on a repris les mêmes chiffres et les mêmes lettres de référence pour désigner les éléments similaires dans un semoir de type connu.

Dans un semoir de ce type, les roues ouvreuses 5, 5' sont portées par un double bras 3A, 3B, qui est articulé en sa partie centrale autour d'un axe **O**.

Les ressorts avant et arrière agissent respectivement en avant et en arrière des roues avant 6 et arrière 4.

La profondeur de travail, c'est-à-dire le degré de pénétration au sol des disques 5, 5' se fait au moyen d'un système de réglage approprié **R** qui permet de modifier la position relative angulaire des demi-bras 3A et 3B l'un par rapport à l'autre.

Par un calcul simple de problème d'équilibre de forces, en statique, la relation entre les forces d'appui au sol des roues 6 et 4 et les forces des ressorts 6A et 6B est telle que la force d'appui **R_{A}** de la roue avant contre sol **S** est d'autant plus grande que la longueur **J** est faible.

On comprend donc que si on veut obtenir une force d'appui faible à l'avant des disques semeurs, il est nécessaire que **J** soit le plus grand possible, ce qui est le cas grâce à la disposition de la figure 2, qui montre le déport avant de la roue 6.

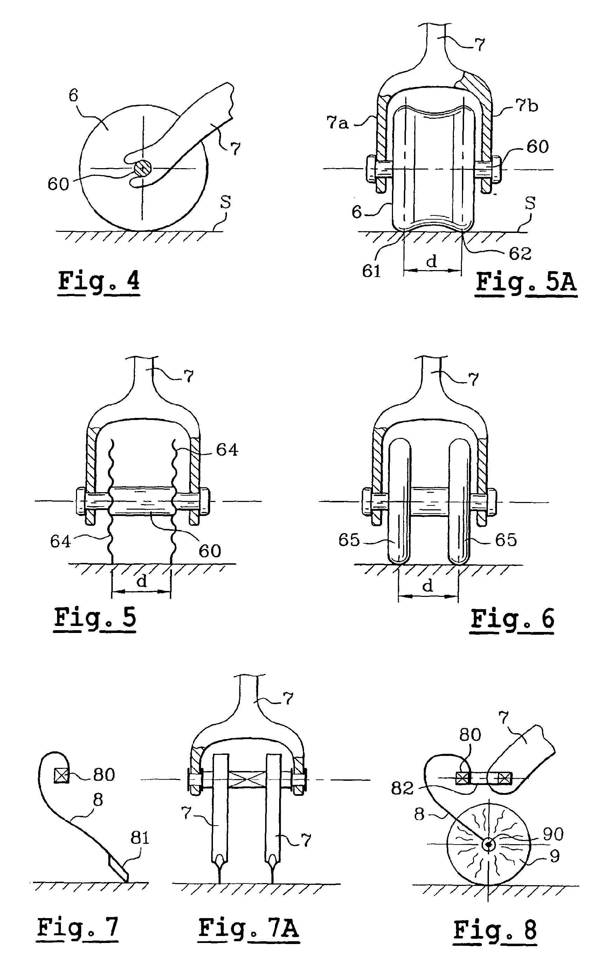

Comme illustré à la figure 4, la roue 6 est de préférence amovible ; à cet effet, l'extrémité du bras auxiliaire 7 peut avoir la forme d'une fourche recevant l'axe 60 de la roue.

Un élément de retenue telle qu'une goupille non représentée peut être utilisée pour éviter la sortie de l'axe hors de la fourche.

Comme on le voit sur la figure 4A, cette roue, par exemple en caoutchouc, possède avantageusement deux bourrelets latéraux 61, 62, dont l'écartement correspondant à l'espacement, en direction transversale, des deux disques 5, 5'.

Ainsi, il se crée un léger écrasement du sol en regard du passage ultérieur des disques, ce qui est favorable à l'ouverture d'un sillon.

Cette figure 4A montre également que la partie avant du bras 7 à la forme générale d'une fourche, dont les joues 7a, 7b entourent la roue 6, et servent au montage de l'arbre 60.

La figure 5 montre l'utilisation, comme outil de travail préparatoire, de deux disques jumelés gaufrés 64 portés par un arbre 60, monté fou en rotation à l'extrémité du bras 7.

L'écartement de ces deux disques est avantageusement égal à **d.**

Il en est de même pour le mode de réalisation de la figure 6, qui montre un organe d'appui au sol qui consiste en une paire de roues jumelées 65 ; celles-ci ont la même fonction que les bourrelets 61, 62 de la roue de la figure 5A.

L'organe d'appui des figures 7 et 7A consiste en une paire de lames à ressorts 8, dont les extrémités 81 sont conformées pour creuser des sillons dans le sol à la distance **d** précitée.

L'organe de la figure 8 combine en quelque sorte les réalisations des figures 5 et 7.

L'outil comporte une paire de disques gaufrés 9 (similaires aux disques 64 mentionnés ci-dessus), qui sont montés à l'extrémité d'une lame élastique flexible 8 similaire à celle de la figure 7.

Ces lames sont portées par un support rigide telle qu'une barre de section carrée 80.

Dans le mode de réalisation de la figure 8, la barre 80 est montée à l'extrémité du bras auxiliaire 7 par l'intermédiaire d'une pièce de liaison 82.

Grâce à la présence des roues avant, il est possible de maintenir les disques ouvreurs toujours à la même hauteur, de sorte qu'ils peuvent travailler constamment à la même profondeur, y compris sur un terrain hétérogène.

La figure 9 permet d'illustrer la manière de mise en oeuvre d'un report de charge, par commande appropriée du vérin hydraulique 100. Il s'agit d'un vérin à double effet piloté à distance (depuis la cabine du véhicule tracteur) par l'opérateur.

Cette figure montre le début de l'opération.

Si on commande le vérin dans le sens de sa rétraction, comme symbolisé par la flèche **f**, on tend à faire basculer l'avant de la partie de châssis principale 2 vers le bas, par pivotement autour de l'axe 11, comme symbolisé par la flèche **f',** ce qui va provoquer un écrasement important des ressorts avant 6A.

L'extrémité avant 10 de la partie de châssis 1, qui -par réaction de l'appui au sol **S** de la roue 6- tend à pivoter vers le haut, va alors porter par sa face supérieure contre la joue supérieure, horizontale, de la chape d'attelage **CH**. Cet effort est absorbé par le poids du véhicule tracteur.

La roue avant 6 va donc se trouver fortement appliquée de haut en bas contre le sol **S**.

Ceci est très intéressant dans le cas où le sol est meuble et aéré ; les roues avant pour ré-appuient le sol, en l'affermissant, devant chaque ligne de semis.

Les disques semeurs 5, 5' retrouvent une bonne résistance du sol, ce qui favorise leur motricité, et garantit une rotation régulière. Les débris plaqués sur un sol plus ferme peuvent être tranchés par ces disques.

La graine est alors bien positionnée en contact avec la terre.

Les rouleaux arrières ont moins de contact avec le sol, ce qui évite une pression trop forte sur la graine et la création de sillons profonds.

Le report de charge sur les rouleaux avant facilite le passage des débris en les couchant vers l'avant et en les plaquant au sol.

L'outil devient facile à utiliser. En départ de saison, il faut régler la hauteur des roues avant pour une profondeur de semis de graines (d'automne par exemple).

Suivant l'état du sol et les conditions météorologiques, le report de charge est réglé en début de chantier.

La vitesse de travail peut être accrue, car le semoir est très stable.

Dans certaines conditions "standard", par exemple sur un labour, il est intéressant de rendre flottant le report de charge ; la machine se trouve en parfait équilibre de charge sur les roues avant et arrière.

On obtient donc une grande polyvalence, un meilleur placement de la graine au contact du sol tout en éliminant le bourrage, et avec une grande facilité d'utilisation.

Dans certaines conditions de travail, il peut être intéressant de soulager les roues avant 6 et de reporter la charge sur les roues arrière. Il suffit pour cela de commander le vérin 100 dans le sens de son extension.

L'encombrement de la machine reste réduit. Dans un mode d'exécution possible du semoir faisant l'objet de la présente invention, le système de ressorts avant 6A est supprimé.

Il lui est substitué, au niveau de chaque articulation 70, un système de rappel élastique, tel qu'un boudin en caoutchouc, travaillant à la torsion.

Ce système sert à la fois à contrôler le débattement entre chaque bras 3 et la biellette associée 33, tout en servant d'axe de pivotement entre ces deux éléments, ainsi que pour l'ajustement en hauteur du bras 7.

Dans le mode de réalisation illustré sur la figure 1, le réglage en hauteur de l'organe d'appui avant, en l'occurrence la roue 6, peut s'opérer en continu, grâce à un système de réglage du type vis-écrou.

Il va de soi qu'un système de réglage non continu (à paliers) est également possible.

C'est le cas pour la variante représentée sur la figure 10.

Dans ce mode d'exécution de l'invention, le bras auxiliaire 7 possède un appendice 73 dirigé vers le haut, percé d'une ouverture, et traversé, avec un certain jeu, par une tige 74 s'étendant longitudinalement et horizontalement. Son extrémité arrière est solidaire, via un axe d'articulation transversal, de la partie 30 du bras porteur 3 correspondant. Cette tige 74 est percée d'une série de trous transversaux 75 dans lesquels on peut insérer sélectivement une paire de doigts d'arrêt 76-77, des goupilles par exemple, pour emprisonner l'appendice 73 dans une position donnée, qui est fonction des trous sélectionnés, et qui détermine ainsi la position angulaire du bras 7 autour de son axe de pivotement 70.

On notera, en outre, que dans ce mode d'exécution, l'appendice 73 sollicite le doigt d'arrêt arrière 77 par l'intermédiaire d'un organe élastique 78, tel qu'un ressort de compression hélicoïdal par exemple, et une rondelle d'appui 79.

Ainsi, la roue avant peut se soulever légèrement, en comprimant le ressort, ce qui permet d'accentuer encore automatiquement la profondeur de semis, notamment en cas de report de charge vers l'avant.

Les roues arrière suiveuses pourraient avoir différentes formes, notamment posséder une surface de roulement conique, apte à presser la graine semée sur le côté et vers le bas, afin de l'appliquer contre le sol en la recouvrant légèrement.

Bien que cela n'ait pas été représenté sur la figure 1, le semoir selon l'invention est naturellement équipé, plus en arrière, de roues relevables, qui sont escamotées pendant le semis.

Pour le déplacement sur route, et pour tourner en bout de champ, les roues sont abaissées, et le roulage se fait au moyen de ces roues arrières, ceci selon un agencement bien connu qu'il n'a pas été jugé utile de représenter sur les dessins afin de ne pas les alourdir inutilement.

## Revendications

1. Semoir comprenant un châssis (1 ; 2) supportant une trémie à semences (200) et destiné à être attelé à un tracteur, une rangée transversale de bras porteurs (3) disposés longitudinalement sous le châssis (1 ; 2) portant chacun une paire d'outils semeurs décalés l'un par rapport à l'autre en direction longitudinale, qui sont alimentés en semences à partir de la trémie (200) et une rangée transversale de rouleaux suiveurs (4) montés individuellement fous en rotation sur les bras porteurs (3), chacun des bras porteurs (3) étant articulé à l'avant, indépendamment l'un de l'autre, par sa partie avant autour de tronçons d'arbres alignés (70) horizontaux et transversaux à l'extrémité arrière d'une biellette (33)qui est elle-même articulée à son extrémité avant sur une partie (21) du châssis (1 ; 2), une série de ressorts avant (6A), et arrière (6B), disposés respectivement en avant et en arrière des outils semeurs (5, 5') sollicitant en permanence chacun des bras (3) au pivotement du haut vers le bas, **caractérisé par le fait que** chacun desdits bras porteurs (3) est équipé d'au moins un organe d'appui au sol (6 ; 64 ; 65 ; 8 ; 9) qui est situé en avant de la ligne (70) desdits tronçons d'arbres, cet organe d'appui étant réglable en hauteur par rapport au bras porteur (3) qu'il équipe, la liaison de l'organe d'appui au sol (6 ; 64 ; 65 ; 8 ; 9) avec le bras porteur (3) étant réalisée en contournant l'axe (211) d'articulation de la biellette (33) sur la partie de châssis (21), par passage au-dessus ou en dessous de cet axe (211).

2. Semoir selon la revendication 1, **caractérisé par le fait que** lesdits ressorts arrière (6B) sont situés en arrière desdits rouleaux suiveurs (4).

3. Semoir selon la revendication 1 ou 2, **caractérisé par le fait que** lesdits outils semeurs comprennent une paire de disques ouvreurs (5, 5') associés chacun à un coutre semeur (51') relié à la trémie (200) au moyen d'une tubulure d'alimentation en semences (52').

4. Semoir selon la revendication 1 ou 2, **caractérisé par le fait que** lesdits outils semeurs consistent en une paire de dents semeuses reliées chacune à la trémie (200) au moyen d'une tubulure d'alimentation en semences.

5. Semoir selon l'une des revendications 1 à 4, **caractérisé par le fait que** ledit organe d'appui au sol est porté par un bras auxiliaire (7) articulé sur ledit bras porteur (3).

6. Semoir selon la revendication 5, **caractérisé par le fait que** l'axe d'articulation du bras auxiliaire (7) audit bras (3) coïncide avec ladite ligne de tronçons d'arbre (70).

7. Semoir selon l'une des revendications 5 ou 6, **caractérisé par le fait que** ledit bras auxiliaire (7) est coudé de sorte qu'il contourne l'axe (211) d'articulation de la biellette (33) sur la partie de châssis (21), par passage au-dessus ou en dessous de cet axe (211).

8. Semoir selon l'une des revendications 5 à 7, **caractérisé par le fait qu'**il comporte des organes de réglage (71,72 ; 74, 75, 76, 77, 78) aptes à ajuster le positionnement angulaire de chacun des bras auxiliaires (7) par rapport au bras porteur (3) auquel il est articulé.

9. Semoir selon la revendication 8, **caractérisé par le fait que** lesdits organes de réglage comprennent un système de rappel élastique, tel qu'un ressort (78), qui confère au bras auxiliaire (7) une certaine liberté de débattement angulaire, du bas vers le haut, à l'encontre de la résistance de ce système élastique, par rapport au bras porteur (3) auquel il est articulé.

10. Semoir selon l'une des revendications 1 à 9, **caractérisé par le fait que** lesdits organes d'appui au sol sont des roues (6 ; 65).

11. Semoir selon l'une des revendications 1 à 9, **caractérisé par le fait que** lesdits organes d'appui au sol sont des disques gaufrés et/ou crénelés adaptés pour préparer le sol.

12. Semoir selon l'une des revendications 1 à 9, **caractérisé par le fait que** lesdits organes d'appui au sol sont des lames niveleuses (8).

13. Semoir selon l'une des revendications 1 à 9, **caractérisé par le fait que** chaque bras est muni d'une paire d'organes d'appui au sol (61-62 ; 64 ; 65 ; 7 ; 9) situés chacun dans l'alignement d'un disque ouvreur (5, 5').

14. Semoir selon l'une des revendications 1 à 13, **caractérisé par le fait que** ledit organe d'appui au sol (6 ; 64 ; 65 ; 8 ; 9) est amovible.

15. Semoir selon l'une des revendications 1 à 14, **caractérisé par le fait que** son châssis est composé d'une partie principale (2) qui supporte la trémie (200) et qui porte l'ensemble des bras porteurs (3), et d'une partie antérieure (1) destinée à être attelée à un véhicule tracteur, que la partie antérieure (1) est articulée à la partie principale (2) autour d'un axe horizontal et transversal (11), et qu'un moyen de commande tel qu'un vérin hydraulique (100) est prévu pour permettre d'ajuster l'angle d'articulation relative de ces deux parties de châssis (1-2).

## Claims

1. Seeder comprising a chassis (1; 2) supporting a seed hopper (200) and designed to be hitched to a tractor, a transversal row of support arms (3) positioned longitudinally under the chassis (1; 2) each carrying a pair of seeding tools offset with respect to one another in the longitudinal direction, which are supplied with seeds from the hopper (200) and a transversal row of following rollers (4) mounted individually free in rotation on the support arms (3), wherein each of the support arms (3) is articulated at the front, independently of one another, by its front section around shaft sections that are aligned (70) horizontally and transversally at the rear end of a connecting rod (33) which is itself articulated at its front end on one part (21) of the chassis (1; 2), wherein a series of front (6A) and rear (6B) springs, positioned respectively in front of and behind the seeding tools (5, 5') permanently soliciting each of the arms (3) when pivoting from the top towards the bottom, **characterised by** the fact that each of said support arms (3) is equipped with at least one ground thrust element (6; 64; 65; 8; 9) that is positioned in front of the line (70) of said shaft sections, wherein this thrust element is adjustable in height with respect to the support arm (3) that it equips, wherein the connection of the ground thrust element (6; 64; 65; 8; 9) with the support arm (3) is made by avoiding the articulation pin (211) of the connecting rod (33) on the part of the chassis (21), by passing above or below this pin (211).

2. Seeder of claim 1, **characterised by** the fact that said rear springs (6B) are positioned behind said following rollers (4).

3. Seeder of claim 1 or 2, **characterised by** the fact that said seeding tools comprise a pair of opening discs (5, 5') each associated to a seeding coulter (51') connected to the hopper (200) by means of a see supply tube (52').

4. Seeder of claim 1 or 2, **characterised by** the fact that said seeding tools consist of a pair of seeding teeth each connected to the hopper (200) by means of a see supply tube.

5. Seeder of any of claims 1 to 4, **characterised by** the fact that said ground thrust element is carried by an auxiliary arm (7) articulated on said support arm (3).

6. Seeder of claim 5, **characterised by** the fact that the articulation pin of the auxiliary arm (7) of said arm (3) coincides with said line of shaft sections (70).

7. Seeder of any of claims 5 or 6, **characterised by** the fact that said auxiliary arm (7) is bent so that it avoids the articulation pin (211) of the connecting rod (33) on the part of the chassis (21), by passing above or below this pin (211).

8. Seeder of any of claims 5 to 7, **characterised by** the fact that it comprises adjustment elements (71, 72; 74, 75, 76, 77, 78) capable of adjusting the angular position of each of the auxiliary arms (7) with respect to the support arm (3) to which it is articulated.

9. Seeder of claim 8, **characterised by** the fact that said adjustment elements comprise an elastic return system, such as a spring (78), which provides the auxiliary arm (7) with a certain freedom of angular movement, from the bottom towards the top, against the resistance of this elastic system, with respect to the support arm (3) to which it is articulated.

10. Seeder of any of claims 1 to 9, **characterised by** the fact that said ground thrust elements are wheels (6; 65) .

11. Seeder of any of claims 1 to 9, **characterised by** the fact that said ground thrust elements are embossed and/or scalloped discs suited to the preparation of the ground.

12. Seeder of any of claims 1 to 9, **characterised by** the fact that said ground thrust elements are levelling blades (8).

13. Seeder of any of claims 1 to 9, **characterised by** the fact that each arm is equipped with a pair of ground thrust elements (61-62; 64; 65; 7; 9) each positioned in the alignment of an opening disc (5, 5').

14. Seeder of any of claims 1 to 13, **characterised by** the fact that said ground thrust element (6; 64; 65; 8; 9) is removable.

15. Seeder of any of claims 1 to 14, **characterised by** the fact that its chassis is composed of a main section (2) which supports the hopper (200) and which carries all of the support arms (3), and a rear section (1) designed to be hitched to a tractor, that the rear section (1) is articulated to the main section (2) around a horizontal and transversal axis (11), and that control means such as a hydraulic actuator (100) is provided to permit the relative articulation angle of these two sections of the chassis (1 - 2) to be adjusted.

## Patentansprüche

1. Sämaschine, folgendes umfassend: ein Gestell (1; 2), das einen Saatgutbehälter (200) trägt und das dafür vorgesehen ist, an einen Traktor angekuppelt zu werden, eine quer angeordnete Reihe von Trägerarmen (3), die in Längsrichtung unter dem Gestell (1; 2) angeordnet sind und von denen jeder ein Paar Sävorrichtungen trägt, die gegeneinander in Längsrichtung versetzt sind und die vom Behälter (200) mit Saatgut versorgt werden, sowie eine quer angeordnete Reihe von Nachlaufwalzen (4), die einzeln frei drehbar auf den Trägerarmen (3) montiert sind, wobei jeder der Trägerarme (3), unabhängig von den anderen, vorne mit seinem vorderen Abschnitt um Achsenteilstücke (70) drehbar aufgehängt ist, die am hinteren Ende eines Schwingarms (33) horizontal und in Querrichtung ausgerichtet sind, wobei der Schwingarm selber an seinem vorderen Ende an einem Abschnitt (21) des Gestells (1; 2) drehbar aufgehängt ist, wobei Sätze von vorderen (6A) und hinteren (6B) Federn, die vor bzw. hinter den Sävorrichtungen (5, 5') angeordnet sind, permanent auf jeden der Arme (3) drücken, um diese von oben nach unten zu schwenken, **dadurch gekennzeichnet, daß** jeder der Trägerarme (3) mit wenigstens einem Element zur Abstützung auf dem Boden (6; 64; 65; 8; 9) ausgerüstet ist, das vor der Linie (70) der Achsenteilstücke angeordnet ist, wobei dieses Abstützelement relativ zu dem Trägerarm (3), den es ausstattet, in der Höhe einstellbar ist und wobei die Verbindung des Elements zur Abstützung auf dem Boden (6; 64; 65; 8; 9) mit dem Trägerarm (3) realisiert wird, indem diese um die Drehachse (211) des Schwingarms (33) am Gestellabschnitt (21) oberhalb oder unterhalb dieser Achse (211) herum geführt wird.

2. Sämaschine nach Anspruch 1, **dadurch gekennzeichnet, daß** die hinteren Federn (6B) hinter den Nachlaufwalzen (4) angeordnet sind.

3. Sämaschine nach Anspruch 1 oder 2, **dadurch gekennzeichnet, daß** die Sävorrichtungen ein Paar Öffnungsscheiben (5, 5') umfassen, zu denen jeweils ein Pflugeisen zum Säen (51') gehört, das mittels Röhren zur Saatgutversorgung (52') mit dem Behälter (200) verbunden ist.

4. Sämaschine nach Anspruch 1 oder 2, **dadurch gekennzeichnet, daß** die Sävorrichtungen aus einem Paar Säzähnen bestehen, von denen jeder mittels einer Röhre zur Saatgutversorgung mit dem Behälter (200) verbunden ist.

5. Sämaschine nach einem der Ansprüche 1 bis 4, **dadurch gekennzeichnet, daß** das Element zur Abstützung auf dem Boden von einem Hilfsarm (7) getragen wird, der am Trägerarm (3) drehbar aufgehängt ist.

6. Sämaschine nach Anspruch 5, **dadurch gekennzeichnet, daß** die Achse der drehbaren Aufhängung des Hilfsarms (7) am Arm (3) mit der Linie der Achsenteilstücke (70) zusammenfällt.

7. Sämaschine nach einem der Ansprüche 5 oder 6, **dadurch gekennzeichnet, daß** der Hilfsarm (7) derart gekrümmt ist, daß er die Achse (211) der drehbaren Aufhängung des Schwingarms (33) am Gestellabschnitt (21) umgeht, indem er oberhalb oder unterhalb an dieser Achse (211) vorbeigeführt wird.

8. Sämaschine nach einem der Ansprüche 5 bis 7, **dadurch gekennzeichnet, daß** er Einstellelemente (71, 72; 74, 75, 76, 77, 78) umfaßt, die dafür geeignet sind, die Winkelposition jedes der Hilfsarme (7) in Bezug auf den Trägerarm (3), an dem er drehbar befestigt ist, einzustellen.

9. Sämaschine nach Anspruch 8, **dadurch gekennzeichnet, daß** die Einstellelemente ein elastisches Rückstellsystem, wie etwa eine Feder (78), umfassen, das dem Hilfsarm (7) eine bestimmte Freiheit im Winkelausschlag, entgegen dem Widerstand dieses elastischen Systems, von unten nach oben, relativ zum Trägerarm (3), an dem er drehbar aufgehängt ist, verleiht.

10. Sämaschine nach einem der Ansprüche 1 bis 9, **dadurch gekennzeichnet, daß** die Elemente zur Abstützung auf dem Boden Räder (6; 65) sind.

11. Sämaschine nach einem der Ansprüche 1 bis 9, **dadurch gekennzeichnet, daß** die Elemente zur Abstützung auf dem Boden gekräuselte und/oder gezackte Scheiben sind, die dafür eingerichtet sind, den Boden zu bearbeiten.

12. Sämaschine nach einem der Ansprüche 1 bis 9, **dadurch gekennzeichnet, daß** die Elemente zur Abstützung auf dem Boden Planierelemente (8) sind.

13. Sämaschine nach einem der Ansprüche 1 bis 9, **dadurch gekennzeichnet, daß** jeder Arm mit einem Paar von Elementen zur Abstützung auf dem Boden (61-62; 64; 65; 7; 9) ausgestattet ist, die jeweils mit einer Öffnungsscheibe (5, 5') ausgerichtet sind.

14. Sämaschine nach einem der Ansprüche 1 bis 13, **dadurch gekennzeichnet, daß** das Element zur Abstützung auf dem Boden (6; 64; 65; 8; 9) abnehmbar ist.

15. Sämaschine nach einem der Ansprüche 1 bis 14, **dadurch gekennzeichnet, daß** ihr Gestellt aus einem Hauptteil (2), der den Behälter (200) und alle Trägerarme (3) trägt, und einem vorderen Teil (1), der dafür vorgesehen ist, an ein Zugfahrzeug angekuppelt zu werden, zusammengesetzt ist, daß der vordere Teil (1) am Hauptteil (2) um eine horizontale und querlaufende Achse (11) drehbar aufgehängt ist und daß ein Betätigungsmittel, wie etwa ein Hydraulikzylinder (100), vorgesehen ist, um die Einstellung des relativen Drehwinkels zwischen diesen beiden Gestellteilen (1-2) zu gestatten.
